# EUROPÄISCHE PATENTSCHRIFT

(11) **EP 4 059 339 B1**
(45) Veröffentlichungstag und Bekanntmachung des Hinweises auf die Patenterteilung: **16.10.2024**
(21) Anmeldenummer: 22157937.8
(22) Anmeldetag: 22.02.2022
(51) Int. Cl.: A01D 89/00, A01D 90/02, A01D 90/12, A01F 15/10

(54) **ERNTEMASCHINE**
HARVESTER
ENGIN D'ABATTAGE-FAÇONNAGE

(30) Priorität: 16.03.2021 DE 102021106374
(43) Veröffentlichungstag der Anmeldung: 21.09.2022
(73) Patentinhaber: Pöttinger Landtechnik GmbH, 4710 Grieskirchen (AT)
(72) Erfinder: GADERMAYR, Andreas, 4710 Grieskirchen (AT); PRECHTL, Wolfgang, 4710 Grieskirchen (AT)
(74) Vertreter: Thoma, Michael

(56) Entgegenhaltungen:
- EP-A1- 1 413 190
- DE-A1- 102016 107 861
- DE-A1- 102018 116 603
- DE-A1- 19 616 999

## Beschreibung

Die vorliegende Erfindung betrifft eine Erntemaschine, vorzugsweise in Form einer Ballenpresse und/oder eines Ladewagens, mit einer Aufnahmevorrichtung zum Aufnehmen von Erntegut vom Boden sowie einem Förderrotor mit Förderzinken zum Weiterfördern des aufgenommenen Ernteguts durch einen Förderkanal hindurch in einen Funktionsraum der Erntemaschine, wobei seitlich an den stirnseitigen Endabschnitten des Förderrotors Querförderschnecken vorgesehen sind.

Bei Ballenpressen ist in der Regel die Pickup breiter als der Förderrotor bzw. die Ballenkammer, in die der Förderrotor das aufgenommene Erntegut weiterfördert, so dass der aufgenommene Erntegutstrom verschmälert werden muss, um in die Ballenkammer zu passen. Eine ähnliche Verschmälerungsaufgabe stellt sich auch bei Ladewagen, die bisweilen eine überbreite Pickup aufweisen, um die Futteraufnahme vom Boden insbesondere beim Kurvenfahren zu verbessern und um zu verhindern, dass aufzunehmendes Erntegut seitlich an der Stachelwalze der Pickup vorbei liegenbleibt.

Um den Erntegutstrom bis zum Funktionsraum der Erntemaschine, der je nach Ausbildung eine Ballenformkammer oder ein Speicherraum sein kann, auf das erforderliche Maß zu verschmälern, ist es bekannt, mit seitlich angeordneten Querförderschnecken die seitlichen Ränder des Erntegutstroms zur Mitte hin querzufördern und hierdurch den Erntegutteppich bzw. -förderstrom zu verschmälern. Die seitlich rechts und links angeordneten Querförderschnecken sitzen dabei üblicherweise auf einer gemeinsamen, liegenden Antriebswelle bzw. sind sie üblicherweise koaxial angeordnet und um eine liegende, quer zum Erntegutstrom ausgerichtete Drehachse rotatorisch antreibbar, wobei die Schneckenwendeln der Querförderschnecken zueinander gegenläufig ausgebildet sind, so dass bei gleicher Drehrichtung der linken und rechten Querförderschnecken eine Querförderwirkung zur Mitte des Erntegutstroms hin erreicht wird.

Die Querförderschnecken können dabei dem Förderrotor vorgelagert sein bzw. zwischen der Pickup-Stachelwalze der Aufnahmevorrichtung und dem Förderrotor angeordnet sein, um den breiteren, aufgenommenen Erntegutstrom von der Pickup auf dem Weg zum Förderrotor auf dessen Maß zu verschmälern. Solche vorgelagerten Querförderschnecken zeigt beispielsweise die DE 10 2009 017 400 A1, oder auch die Schriften EP 12 52 813 B1, EP 14 17 879 A1 oder EP 15 20 466 A1, wobei die vorgelagerten Querförderschnecken auch Teil eines zusätzlichen Förderrotors sein können, der zwischen der Stachelwalze der Pickup und den eigentlichen Förderrotor, der das Erntegut in den Funktionsraum fördert und ggf. einem Schneidwerk zugeordnet ist, angeordnet ist, vgl. beispielsweise DE 10 2016 107 861 A1, DE 10 2018 116 603 A1, EP 14 13 190 A1 oder DE 196 16 999 A1.

Solche dem Förderrotor vorgelagerte Querförderschnecken zwischen dem Stachelrotor der Pickup und dem Förderrotor bedingen jedoch ausreichend Luft zwischen Stachelwalze und Schneidwerksrotor bzw. muss die Stachelwalze vom Förderrotor weiter beabstandet werden, um Platz für derartige Querförderschnecken zu schaffen. Hierdurch kann es je nach Ernteguttyp zu einer unsauberen Übergabe des Ernteguts vom Stachelrotor zum Förderrotor kommen, beispielsweise bei feuchtem, klebrigem Erntegut, das an den Abstreifblechen des Stachelrotors klebenzubleiben droht, was dann zu einer erhöhten Schopper- und Verstopfungsgefahr führt.

Um den Abstand zwischen Förderrotor und Pickup-Stachelwalze klein halten zu können, wurde auch bereits vorgeschlagen, die Querförderschnecken seitlich an den Stirnseiten des Stachelrotors der Pickup vorzusehen, vgl. DE 10 2011 013 243 A1.

Ferner wurde bereits vorgeschlagen, die Querförderschnecken seitlich an den stirnseitigen Endabschnitten des Förderrotors vorzusehen, der das Erntegut in den Funktionsraum der Erntemaschine fördert. Bei solchen sog. Integralrotoren werden an den Rotormantel, der im Zentralbereich des Förderrotors dessen Förderzinken trägt, rechts und links Querförderschnecken angeschweißt, die sich mit dem Förderrotor mitdrehen und durch ihre Förderwendeln die seitlichen Randabschnitte des Erntegutteppichs zusammenschieben. Solche Integralrotoren mit seitlich angeschweißten Querförderschnecken zeigen beispielsweise die Schriften EP 37 32 956 A1, EP 32 31 272 B1, EP 21 68 427 B1, EP 23 87 872 B1, die EP 10 97 629 B1 und die EP 08 15 720 B1.

Die Förderwirkung der seitlich angeschweißten Querförderschnecken solcher Integralrotoren ist jedoch begrenzt, so dass es dazu kommt, dass das Erntegut am Schneidwerk vorbei in den Funktionsraum der Erntemaschine gelangt. Die Messer des Schneidwerks sind üblicherweise den Förderzinken des Förderrotors zugeordnet und damit nur im Zentralbereich des Integralrotors vorgesehen, so dass von den Querförderschnecken nicht rechtzeitig zur Mitte hin quergefördertes Erntegut an den Messern vorbei in den Funktionsraum gelangen kann.

Der vorliegenden Erfindung liegt hiervon ausgehend die Aufgabe zugrunde, eine verbesserte Erntemaschine der genannten Art zu schaffen, die Nachteile des Standes der Technik vermeidet und Letzteren in vorteilhafter Weise weiterbildet. Insbesondere soll eine ausreichende Querförderwirkung erzielt werden, um den an sich zu breiten Erntegutstrom verlässlich und rechtzeitig zu verschmälern und einen seitlichen Bypass an einem Schneidwerk vorbei zu vermeiden, ohne hierfür eine große Beabstandung der Stachelwalze der Aufnahmevorrichtung von dem Förderrotor zu benötigen und sich hierdurch Probleme bei der Futterübergabe von der Stachelwalze zum Förderrotor einzuhandeln.

Erfindungsgemäß wird die genannte Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, die seitlichen Querförderschnecken in ähnlicher Weise wie bei einem Integralrotor seitlich anschließend an die stirnseitigen Endabschnitte des Förderrotors vorzusehen, jedoch von der Drehzahl bzw. Drehrichtung des Förderrotors zu entkoppeln, um die Querförderschnecken mit der benötigten bzw. sinnvollen Drehzahl und -richtung unabhängig von der Drehzahl des Förderrotors antreiben zu können.

Erfindungsgemäß sind die seitlich an den stirnseitigen Endabschnitten des Förderrotors vorgesehenen Querförderschnecken relativ zum Förderrotor drehbar gelagert, wobei ein Schneckenantrieb zum Antreiben der Querförderschnecken mit einer vom Förderrotor abweichenden Drehrichtung und ggf. auch einer abweichenden Drehzahl vorgesehen ist.

Durch die Anordnung der Querförderschnecken an den seitlichen, stirnseitigen Endabschnitten des Förderrotors können die Aufnahmevorrichtung, insbesondere deren Stachelrotor, und der Förderrotor in Richtung des Erntegutstroms nahe beieinander sitzen, um eine störungsunanfällige und verstopfungsfreie Erntegutübergabe von der Aufnahmevorrichtung an den Förderrotor sicherzustellen. Gleichzeitig kann durch die von der Drehrichtung bzw. Drehzahl des Förderrotors unabhängige Drehrichtung und Drehzahl der Querförderschnecken eine ausreichende Querförderwirkung sichergestellt werden, die eine ausreichende Verschmälerung des Erntegutstroms sicherstellt und ein Vorbeifördern am Schneidwerk, soweit vorhanden, vermeiden kann.

In vorteilhafter Weiterbildung der Erfindung kann der Schneckenantrieb hinsichtlich der Schneckendrehzahl variabel einstellbar ausgebildet sein, wobei die Schneckendrehzahl insbesondere auch gegenüber der Förderrotor-Drehzahl veränderbar eingestellt werden kann.

Dabei sieht der Schneckenantrieb eine Drehrichtung der Querförderschnecken vor, die zur Drehrichtung des Förderrotors entgegengesetzt ist, so dass die seitlichen Querförderschnecken einerseits und der Förderrotor andererseits zueinander gegenläufig rotieren. Hierdurch kann eine verbesserte Querförderwirkung erzielt werden. Die Förderzinken des Förderrotors nehmen quer liegendes Erntegut nicht schon mit, bevor die Wendelgänge der Querförderschnecken dessen Querförderung bewirken.

In vorteilhafter Weiterbildung der Erfindung kann der Schneckenantrieb hinsichtlich seiner Drehrichtung umkehrbar ausgebildet sein, um die Querförderschnecken wahlweise in die eine oder in die andere Drehrichtung antreiben zu können.

Gemäß der Erfindung ist vorgesehen, dass der Förderrotor als Überkopfrotor ausgebildet ist und der Förderkanal, durch den hindurch das Erntegut in den Funktionsraum der Erntemaschine gelangt, über eine Oberseite des Förderrotors hinweg führt. Dabei können die Querförderschnecken zumindest in einem Betriebsmodus des Schneckenantriebs entgegengesetzt zur Förderrotordrehrichtung mit einer der Aufnahmevorrichtung zugewandten Vorderseite nach unten drehen. Bei einer solchen Konfiguration nehmen die Förderzinken des Förderrotors das von der Aufnahmevorrichtung her kommende Erntegut nach oben mit und fördern es über Kopf durch den Förderkanal hindurch in den Funktionsraum der Erntemaschine, während die seitlich rechts und links am Förderrotor angeordneten Querförderschnecken mit ihren Förderwendeln das Erntegut nach unten zu drücken versuchen bzw. das Erntegut beim Entlangstreichen an den Querförderwendeln mit einer nach unten gerichteten Kraftkomponente beaufschlagt wird. Hierdurch kann verhindert werden, dass das Erntegut von den Förderzinken zu leicht mitgerissen und über die Schneckenwendeln hinweggehoben wird, ohne eine Querförderwirkung zu erfahren. Hierdurch kann besser vermieden werden, dass das Erntegut an einem gegebenenfalls vorhandenen Schneidwerk seitlich vorbei in die Funktionskammer gelangt.

Die Querförderschnecken können koaxial zueinander angeordnet sein bzw. um eine gemeinsame, liegende Drehachse, die sich quer zur Fahrtrichtung und/oder parallel zur Drehachse des Förderrotors erstrecken kann, rotatorisch angetrieben werden.

Die Querförderschnecken können dabei mit ihren Drehachsen koaxial zur Drehachse des Förderrotors angeordnet sein. Alternativ kann aber auch ein gewisser Versatz zwischen den Drehachsen der Querförderschnecken einerseits und der Drehachse des Förderrotors andererseits vorgesehen sein. Beispielsweise können die Querförderschnecken mit ihren Drehachsen gegenüber der Förderrotor-Drehachse ein Stück weit nach unten und/oder nach vorne zur Aufnahmevorrichtung versetzt sein, um eine aggressivere Querförderwirkung zu erzielen.

Vorteilhafterweise sind aber die Querförderschnecken im Wesentlichen fluchtend mit dem Förderrotor ausgerichtet. Betrachtet man den Förderrotor in Richtung seiner Drehachse, überdecken sich die Querförderschnecken mit dem Förderrotor bzw. einem um die Förderzinken gelegten Hüllzylinder großflächig, wobei beispielsweise mindestens 50% der Querschnittsfläche des besagten Hüllzylinders um die Förderzinken des Förderrotors von der Querförderschnecke verdeckt sein können, wenn die Blickrichtung der Richtung der Rotordrehachse entspricht.

Die Querförderschnecken können grundsätzlich verschieden dimensioniert und hinsichtlich Durchmesser und Lage verschieden an den Förderrotor angepasst sein. Vorteilhafterweise können die Querförderschnecken des Förderrotors, insbesondere den genannten Hüllzylinder um die Förderzinken herum ohne größeren Durchmessersprung oder im Wesentlichen durchmessergleich seitlich fortsetzen.

Dabei kann eine zweifache Durchmesseranpassung vorgesehen sein. Einerseits kann ein Hüllzylinder um die Wendelgänge der Querförderschnecken zumindest näherungsweise den gleichen Durchmesser besitzen wie ein Hüllzylinder um die Förderzinken des Förderrotors. Andererseits kann - gegebenenfalls unabhängig von der genannten Hüllzylinder-Anpassung - ein Schneckenzylinder, von dessen Außenseite die Wendelgänge vorspringen können, im Wesentlichen denselben Durchmesser aufweisen wie ein Rotorzylinder, von dessen Außenseite die Förderzinken des Förderrotors vorspringen.

Insbesondere können die Schneckenwendel näherungsweise bündig und/oder durchmessersprungfrei an die Förderzinken bzw. deren Hüllkontur anschließen. Alternativ oder zusätzlich kann der Kernzylinder der Querförderschnecken im Wesentlichen bündig und/oder durchmessersprungfrei an den Kernzylinder des Förderrotors anschließen.

Unabhängig von der genannten Durchmesseranpassung können die Querförderschnecken vorteilhafterweise axial spaltfrei an die seitlichen Stirnseiten des Förderrotors anschließen. Bei Betrachtung in Erntegutförderrichtung bzw. aus einer Frontansicht betrachtet können die Querförderschnecken seitlich neben dem Förderrotor überlappungsfrei und im Wesentlichen spaltfrei an den Förderrotor anschließend angeordnet sein.

Um die Querförderschnecken relativ zu dem Förderrotor drehbar zu lagern, können die Querförderschnecken vom Förderrotor separate Drehlager aufweisen, die beispielsweise unabhängig von der Drehlagerung des Förderrotors an einem Maschinenrahmen bzw. einem Anbauteil abgestützt bzw. befestigt sein können.

In alternativer Weiterbildung der Erfindung können die Querförderschnecken aber auch drehbar an dem Förderrotor gelagert sein, wobei der Förderrotor beispielsweise stirnseitig bzw. seitlich vorstehende Achsstummel aufweisen kann, auf die die Querförderschnecken aufgeschoben und durch geeignete Lager, beispielsweise Wälzlager oder Gleitlager, abgestützt sein können. Dabei können die Querförderschnecken durch zumindest ein Radiallager und/oder durch zumindest ein Axiallager am Förderrotor und/oder an einem Maschinenrahmen und/oder einem daran befestigten Anbauteil abgestützt sein.

In Weiterbildung der Erfindung können der Förderrotor einerseits und die Querförderschnecken andererseits auch auf einer gemeinsamen Drehachse durch Drehlager drehbar abgestützt sein. Beispielsweise können die Querförderschnecken und der Förderrotor auf einer durchgängigen Achse aufgefädelt sein oder es können seitlich von den Stirnseiten her zwei Drehachsen durch die Querförderschnecken hindurch in den Förderrotor hineinragen, um einerseits die Querförderschnecken an der Drehachse und andererseits den Förderrotor an der Drehachse abstützen zu können, insbesondere durch geeignete Drehlager wie Wälz- oder Gleitlager.

Der Schneckenantrieb zum rotatorischen Antreiben der Querförderschnecken kann von der Antriebsbewegung der Aufnahmetrommel abgeleitet sein. Beispielsweise kann der Schneckenantrieb an den Förderrotorantrieb oder den Förderrotor selbst durch eine Koppeleinrichtung angekoppelt sein. Insbesondere kann die Drehbewegung der Querförderschnecken von der Drehbewegung des Förderrotors abgeleitet werden, oder umgekehrt die Drehung des Förderrotors von der Drehbewegung einer Querförderschnecke abgeleitet sein, wobei zwischen Querförderschnecke und Förderrotor eine drehmomentübertragende Antriebsverbindung vorgesehen sein kann. Hierdurch kann beispielsweise ein gemeinsamer Antriebsmotor oder eine gemeinsame Antriebsquelle in Form einer Antriebswelle zum Antreiben des Förderrotors und der Querförderschnecken ausreichend sein.

Insbesondere kann die rotatorische Antriebsbewegung der Querförderschnecken in Abhängigkeit der rotatorischen Antriebsbewegung des Förderrotors bereitgestellt werden, wobei eine Antriebsverbindung zwischen Förderrotor und Querförderschnecken ein Getriebe umfassen kann, das die Querförderschnecken drehmomentübertragend und somit rotatorisch an den Motor anbindet.

Um die Drehrichtung der Querförderschnecken gegenüber der Drehrichtung des Förderrotors umkehren zu können und/oder die Drehzahl der Querförderschnecken gegenüber der Drehzahl des Förderrotors variabel einstellen zu können, kann die genannte Kopplungseinrichtung ein entsprechendes Getriebe aufweisen. Soll nur die Drehrichtung der Querförderschnecken gegenläufig zur Drehrichtung des Förderrotors sein, kann ein Getriebe mit einem festen Übersetzungsverhältnis vorgesehen sein. Ein solches Getriebe mit festem Übersetzungsverhältnis kann auch Verwendung finden, wenn die Querförderschnecken im Vergleich zum zentralen Förderrotor unterschiedlich schnell bzw. mit unterschiedlicher Drehzahl, aber gleicher Drehrichtung laufen sollen. Soll vorteilhafterweise die Drehzahl der Querförderschnecken variabel gegenüber der Drehzahl des Förderrotors verändert werden können, kann ein schaltbares bzw. ggf. auch ein stufenlos verstellbares Getriebe vorgesehen sein.

Alternativ oder zusätzlich zu einem solchen gegebenenfalls schaltbaren und/oder verstellbaren Getriebe kann der Schneckenantrieb zum Antreiben der Querförderschnecken aber auch einen unabhängig vom Antrieb des Förderrotors steuerbaren Antriebsmotor umfassen, beispielsweise in Form eines Elektromotors oder eines Hydraulikmotors, was eine einfache Einstellung variabler Drehzahlen ermöglicht, insbesondere auch unabhängig von der Drehzahl des Förderrotors.

Alternativ zu einem solchen eigenständigen Antriebsmotor können die Querförderschnecken aber auch über einen mechanischen Antriebsstrang von einer anderen Antriebsquelle her angetrieben werden, beispielsweise der Zapfwelle eines Schleppers, an den die Erntemaschine angebaut werden kann.

In Weiterbildung der Erfindung kann der Förderrotor zusammen mit den seitlich angesetzten Querförderschnecken eine Arbeitsbreite besitzen, die im Wesentlichen einer Arbeitsbreite der vorauslaufenden Aufnahmevorrichtung entsprechen kann, insbesondere der Arbeitsbreite einer Stachelwalze einer Pickup.

Die Arbeitsbreite des Förderrotors ohne die seitlich angesetzten Querförderschnecken kann im Wesentlichen der Einlaufbreite des nachgeordneten Funktionsraums, insbesondere der Ballenformkammer einer Ballenpresse entsprechen.

Unabhängig hiervon können die seitlichen Querförderschnecken jeweils eine Arbeitsbreite besitzen, die beispielsweise 10% - 35% oder 20 % - 30 % der Arbeitsbreite des mit Förderzinken bestückten Förderrotors entsprechen kann. Beispielsweise können die beiden Querförderschnecken zusammen eine Arbeitsbreite von etwa 50 - 80 % der Arbeitsbreite des mit Förderzinken bestückten Förderrotors besitzen.

Je nach Erntegut können in einem Bereich zwischen der Aufnahmevorrichtung und dem genannten Förderrotor grundsätzlich weitere Querfördermittel wie Leitbleche, Querförderschnecken und dergleichen vorgesehen sein. Um einen kompakten Aufbau mit geringer Distanz zwischen der Aufnahmevorrichtung und dem Förderrotor zu erreichen, kann in vorteilhafter Weiterbildung der Erfindung jedoch der Bereich zwischen der Aufnahmevorrichtung und dem Förderrotor frei von Querfördermitteln ausgebildet sein.

Die genannte Aufnahmevorrichtung in Form einer Pickup mit Stachelwalze sowie der genannte Förderrotor mit den seitlichen Querförderschnecken können dabei die beiden einzigen Förderorgane sein, die das Erntegut vom Boden aufnehmen und in den Funktionsraum der Erntemaschine fördern. Das Erntegut wird somit auf seinem Weg vom Boden in den Funktionsraum nur von zwei Förderorganen aktiv gefördert. Hierdurch kann eine insgesamt kompaktere Bauweise bei gleichzeitig futterschonender Verarbeitung erreicht werden.

Der genannte Förderrotor mit den seitlichen Querförderschnecken ist dabei einem Schneidwerk zugeordnet, um das Erntegut zu zerschneiden, wobei das genannte Schneidwerk in einen Förderkanal hineinragende Schneidmesser umfasst, an denen Förderzinken des Förderrotors vorbeistreichen. Das Schneidwerk kann dabei auf die Breite des Förderrotors beschränkt sein, sodass im Bereich der Querförderschnecken keine Schneidmesser vorgesehen sind.

Insbesondere kann der genannte Förderrotor der letzte Rotor bzw. das letzte Förderorgan vor dem Funktionsraum der Erntemaschine, das heißt vor der Ballenformkammer oder dem Laderaum des Ladewagens, sein. Der Förderrotor treibt das Erntegut in den genannten Funktionsraum, ohne dass ein weiteres Förderorgan den Erntegutstrom befördern würde. Der Förderrotor, an dessen stirnseitigen Endabschnitten die Querförderschnecken vorgesehen sind, fördert das Erntegut direkt und ohne Zwischenschaltung weiterer Förderorgane in den Funktionsraum der Erntemaschine.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine perspektivische Darstellung der Aufnahmevorrichtung und des nachgeordneten Förderrotors mit seitlichen Querförderschnecken einer Erntemaschine nach einer vorteilhaften Ausführung der Erfindung, und
- Fig. 2:: eine perspektivische Darstellung des Förderrotors aus Fig. 1 mit den seitlich an den Stirnseiten des Förderrotors angesetzten Querförderschnecken, die gegenläufig zum Förderrotor rotierend antreibbar sind.

Die in den Figuren ausschnittsweise dargestellte Erntemaschine 1 kann als Ballenpresse oder auch als Ladewagen ausgebildet sein. Unabhängig hiervon kann die Erntemaschine 1 ein Anbaugerät bilden, das über eine geeignete Anbauvorrichtung beispielsweise in Form einer Deichsel an einem Schlepper angebaut werden kann.

Die Erntemaschine 1 umfasst eine Aufnahmevorrichtung 2 zum Aufnehmen von Erntegut vom Boden, wobei die genannte Aufnahmevorrichtung 2 eine umlaufend antreibbare Stachelwalze 3 aufweisen kann, deren Stacheln gesteuert und/oder ungesteuert um eine liegende Stachelwalzenachse umlaufen können, die sich quer zur Fahrtrichtung der Erntemaschine 1 erstrecken kann.

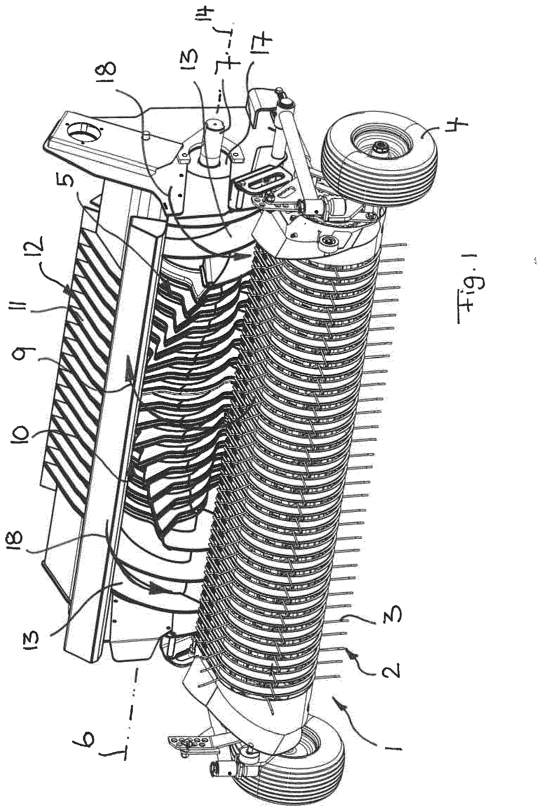

Wie Fig. 1 zeigt, kann die Aufnahmevorrichtung 2 durch ein Stützfahrwerk 4 am Boden abgestützt sein. Alternativ kann die Aufnahmevorrichtung 2 auch schwebend über den Boden geführt werden.

Die genannte Aufnahmevorrichtung 2 übergibt das vom Boden aufgenommene Futter an einen Förderrotor 5, der der Aufnahmevorrichtung nachgeordnet, beispielsweise in Fahrtrichtung hinter und leicht oberhalb der Stachelwalze 3 angeordnet sein kann.

Der genannte Förderrotor 5 kann eine liegende, quer zur Fahrtrichtung ausgerichtete Drehachse 6 aufweisen und von einem Förderrotorantrieb 7 rotatorisch angetrieben werden. Der Förderrotorantrieb 7 kann beispielsweise einen Antriebsstrang zur Schlepperzapfwelle umfassen, aber auch einen eigenen Antriebsmotor wie beispielsweise einen Elektromotor aufweisen.

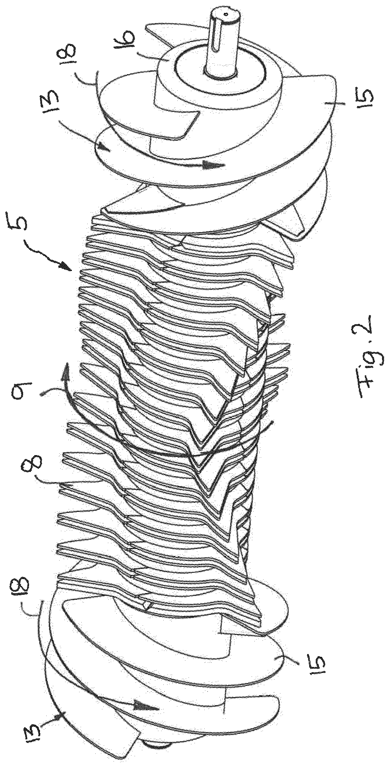

Der genannte Förderrotor 5 umfasst dabei vom Zentrum des Förderrotors 5 nach außen abstehende Förderzinken 8, die in mehreren, über den Umfang verteilten Reihen nebeneinander angeordnet sein können, vgl. Fig. 2. Dabei können die Reihen parallel zur Drehachse 6 des Förderrotors 5 verlaufen, alternativ aber auch einen verschraubten oder in sich verschränkten Verlauf haben, wie dies Fig. 2 zeigt.

Der genannte Förderrotor 5 ist vorteilhafterweise als Über-Kopf-Rotor ausgebildet und fördert den von der Aufnahmevorrichtung 2 herkommenden Futterstrom durch einen Förderkanal hindurch, der sich über eine Oberseite des Förderrotors 5 hinweg erstreckt und in einen Funktionsraum der Erntemaschine 1 führt, der im Falle einer Ballenpresse eine Ballenformkammer und im Falle eines Ladewagens ein Speicherraum sein kann. Dabei besitzt der Förderrotor 5 eine Drehrichtung 9, bei der die Förderzinken 8 an einer der Aufnahmevorrichtung 2 zugewandten Vorderseite des Förderrotors 5 nach oben rotieren, so dass das von der Aufnahmevorrichtung 2 herkommende Futter zunächst leicht angehoben und über den Förderrotor 5 hinweg gefördert wird.

In dem Förderkanal 10, der über den Förderrotor 5 hinwegführt, sind die Messer 11 eines Schneidwerks 12 vorgesehen, die in den genannten Förderkanal 10 hineinragen. Beispielsweise können die Messer 11 von einer Oberseite her in den genannten Förderkanal 10 hineinragen und mit den Förderzinken 8 zusammenwirken, um das Erntegut zu zerschneiden, wie dies perse bekannt ist.

Seitlich rechts und links an den Stirnseiten des Förderrotors 5 sind zwei Querförderschnecken 13 vorgesehen, die im Wesentlichen bündig und spaltfrei an den genannten Förderrotor 5 anschließen können. Hiervon unabhängig können die genannten Querförderschnecken 13 mit ihren Schneckendrehachsen 14 zumindest näherungsweise koaxial zur Drehachse 6 des Förderrotors 5 angeordnet sein.

Die Querförderschnecken 13 können jeweils eine ein- oder mehrgängige Schneckenwendel 15 aufweisen, die sich schraubenförmig um einen Schneckenkernzylinder 16 herum erstrecken können und von diesem nach außen vorspringen können.

Der genannte Schneckenkernzylinder 16 kann näherungsweise denselben Durchmesser besitzen wie ein Kernzylinder des Förderrotors 5, von dem dessen Förderzinken 8 vorspringen. Unabhängig hiervon kann ein Hüllzylinder um die Schneckenwendeln 15 herum näherungsweise denselben Durchmesser besitzen wie ein Hüllzylinder um die Förderzinken 8 herum.

Wie Fig. 2 verdeutlicht, können die Querförderschnecken 13 von einem Schneckenantrieb 17 gegenläufig zu dem Förderrotor 5 angetrieben werden, so dass die Schneckenwendeln 15 an einer der Aufnahmevorrichtung 2 zugewandten Vorderseite nach unten laufen, wie dies der Drehrichtungspfeil 18 verdeutlicht.

Der genannte Schneckenantrieb 17 kann beispielsweise über einen mechanischen Antriebsstrang von einer Schlepperzapfwelle her Antriebsleistung empfangen. Alternativ oder zusätzlich kann der Schneckenantrieb 17 aber auch eine oder mehrere Antriebsmotoren für die Querförderschnecken 13 aufweisen, beispielsweise in Form eines Elektromotors.

In alternativer Weiterbildung der Erfindung kann der Schneckenantrieb 17 auch durch ein Getriebe an den Förderrotor 5 bzw. den Förderrotorantrieb 7 angekoppelt sein, um die Antriebsleistung der Querförderschnecken 13 von der Antriebsbewegung des Förderrotors 5 abzuleiten.

## Patentansprüche

1. Erntemaschine, vorzugsweise in Form einer Ballenpresse und/oder eines Ladewagens, mit einer Aufnahmevorrichtung (2) zum Aufnehmen von Erntegut vom Boden, einem Förderrotor (5) mit Förderzinken (8) zum Weiterfördern des aufgenommenen Ernteguts durch einen Förderkanal (10) in einen Funktionsraum der Erntemaschine (1), sowie einem Schneidwerk (12) mit in den Förderkanal (10) hineinragenden Messern (11), wobei seitlich an den stirnseitigen Endabschnitten des Förderrotors (5) Querförderschnecken (13) vorgesehen sind, wobei der Förderrotor (5) ein Überkopfrotor ist und der Förderkanal (10) über eine Oberseite des Förderrotors (5) hinweg führt, wobei die Querförderschnecken (13) relativ zum Förderrotor (5) drehbar gelagert sind und von einem Schneckenantrieb (17) zum Antreiben der Querförderschnecken (13) entgegengesetzt zur Drehrichtung (9) des Förderrotors (5) mit einer der Aufnahmevorrichtung (2) zugewandten Vorderseite nach unten drehend antreibbar sind, **dadurch gekennzeichnet, dass** die Förderzinken (8) des Förderrotors (5) an den in den Förderkanal (10) hineinragenden Messern (11) vorbeistreichen.

2. Erntemaschine nach dem vorhergehenden Anspruch, wobei der Schneckenantrieb (17) eine variabel einstellbare, gegenüber der Drehzahl des Förderrotors (5) veränderbare Drehzahl aufweist.

3. Erntemaschine nach einem der vorhergehenden Ansprüche, wobei der Schneckenantrieb (17) eine umkehrbare Antriebsrichtung besitzt.

4. Erntemaschine nach einem der vorhergehenden Ansprüche, wobei dem Schneckenantrieb (17) eine Drehzahlsteuervorrichtung zum variablen Einstellen der Querförderschneckendrehzahl relativ zur Förderrotordrehzahl zugeordnet ist.

5. Erntemaschine nach dem vorhergehenden Anspruch, wobei die Querförderschnecken (13) wahlweise mit einer niedrigeren, derselben oder einer höheren Drehzahl als der Förderrotor (5) antreibbar sind.

6. Erntemaschine nach einem der vorhergehenden Ansprüche, wobei der Schneckenantrieb (17) mittels eines Getriebes an den Förderrotor (5) oder einen Förderrotorantrieb (7) angebunden ist, wobei das genannte Getriebe vorzugsweise schaltbar und/oder mit verstellbarem Über-Untersetzungsverhältnis ausgebildet ist.

7. Erntemaschine nach einem der Ansprüche 1 bis 5, wobei der Schneckenantrieb (17) einen von einem Förderrotorantrieb (7) unabhängig ansteuerbaren Antriebsmotor, beispielsweise in Form eines Elektromotors oder eines Hydraulikmotors, aufweist.

8. Erntemaschine nach einem der vorhergehenden Ansprüche, wobei die Querförderschnecken (13) durch Drehlager drehbar an dem Förderrotor (5) gelagert sind.

9. Erntemaschine nach einem der Ansprüche 1-7, wobei die Querförderschnecken (13) und der Förderrotor (5) durch Drehlager auf einer gemeinsamen Achse drehbar gelagert sind.

10. Erntemaschine nach einem der vorhergehenden Ansprüche, wobei der Förderrotor (5) einerseits und die Querförderschnecken (13) andererseits durch separate Drehlager unabhängig voneinander an einem Maschinenrahmen oder einem damit verbundenen Anbaurahmenteil drehbar gelagert sind.

11. Erntemaschine nach einem der vorhergehenden Ansprüche, wobei nur zwei Förderorgane, nämlich die genannte Aufnahmevorrichtung (2) einerseits sowie der Förderrotor (5) mit den seitlichen Querförderschnecken (13) zum Fördern des Ernteguts vom Boden in den Funktionsraum der Erntemaschine (1) andererseits vorgesehen sind und das Erntegut direkt aneinander übergeben, wobei die Aufnahmevorrichtung (2) das erste Förderorgan für das Erntegut und der Förderrotor (5) mit den seitlichen Querförderschnecken (13) das letzte Förderorgan für das Erntegut auf dessen Weg vom Boden in den Funktionsraum ist.

12. Erntemaschine nach einem der vorhergehenden Ansprüche, wobei die Querförderschnecken (13) umschmiegende Hüllzylinder zumindest näherungsweise denselben Durchmesser besitzen wie ein den Förderrotor (5) umschmiegender Hüllzylinder und/oder die die Querförderschnecken (13) umschmiegenden Hüllzylinder bündig und/oder spaltfrei an dem den Förderrotor (5) umschmiegenden Hüllzylinder anschließen.

## Claims

1. Harvester, preferably in the form of a baling press and/or a loader wagon, comprising a receiving device (2) for receiving harvested crop from the ground, a conveyor rotor (5) comprising conveyor tines (8) for conveying the received harvested crop further through a conveying channel (10) into a functional chamber of the harvester (1), and a cutting unit (12) comprising cutting blades (11) that protrude into the conveying channel (10), wherein transverse screw conveyors (13) are provided laterally at the front-face end portions of the conveyor rotor (5), wherein the conveyor rotor (5) is an overhead rotor and the conveying channel (10) leads away beyond an upper side of the conveyor rotor (5), wherein the transverse screw conveyors (13) are mounted so as to be rotatable relative to the conveyor rotor (5) and can be rotatably driven by a worm drive (17) for driving the transverse screw conveyors (13) in the opposite direction from the direction of rotation (9) of the conveyor rotor (5), with a front face, facing the receiving device (2), directed downwards,
**characterised in that**
the conveyor tines (8) of the conveyor rotor (5) brush past the cutting blades (11) protruding into the conveying channel (10).

2. Harvester according to the preceding claim, wherein the worm drive (17) has a speed that can be set in a variable manner and can be changed relative to the speed of the conveyor rotor (5).

3. Harvester according to either of the preceding claims, wherein the worm drive (17) has a reversible drive direction.

4. Harvester according to any of the preceding claims, wherein the worm drive (17) is assigned a speed controller for variably setting the transverse screw conveyor speed relative to the conveyor rotor speed.

5. Harvester according to the preceding claim, wherein the transverse screw conveyors (13) can electively be driven at a lower, the same, or a higher speed compared with the conveyor rotor (5).

6. Harvester according to any of the preceding claims, wherein the worm drive (17) is connected to the conveyor rotor (5) or a conveyor rotor drive (7) by means of a transmission, wherein said transmission is preferably switchable and/or configured having an adjustable gear ratio/reduction gear ratio.

7. Harvester according to any of claims 1 to 5, wherein the worm drive (17) comprises a drive motor which is actuatable independently of the conveyor rotor drive (7), for example in the form of an electric motor or a hydraulic motor.

8. Harvester according to any of the preceding claims, wherein the transverse screw conveyors (13) are rotatably mounted on the conveyor rotor (5) by means of a pivot bearing.

9. Harvester according to any of claims 1-7, wherein the transverse screw conveyors (13) and the conveyor rotors (5) are rotatably mounted on a common shaft by means of pivot bearings.

10. Harvester according to any of the preceding claims, wherein the conveyor rotors (5) on the one hand and the transverse screw conveyors (13) on the other hand are rotatably mounted independently of one another, by separate pivot bearings, on a machine frame or an attachment frame part connected thereto.

11. Harvester according to any of the preceding claims, wherein only two conveyor members, specifically the mentioned receiving device (2) on the one hand and the conveyor rotor (5) having the transverse screw conveyors (13), are provided for conveying the harvested crop from the ground into the functional chamber of the harvester (1) and transfer the harvested crop directly to one another, wherein the receiving device (2) is the first conveyor member for the harvested crop and the conveyor rotor (5) having the transverse screw conveyors (13) is the last conveyor member for the harvested crop on its way from the ground into the functional chamber.

12. Harvester according to any of the preceding claims, wherein enveloping cylinders closely surrounding the transverse screw conveyors (13) have at least approximately the same diameter as an enveloping cylinder closely surrounding the conveyor rotor (5), and/or the enveloping cylinders closely surrounding the transverse screw conveyors (13) adjoin the enveloping cylinder closely surrounding the conveyor rotor (5) in a flush and/or gap-free manner.

## Revendications

1. Machine de récolte, de préférence sous la forme d'une presse à balles et/ou d'une remorque autochargeuse, comportant un dispositif de ramassage (2) destiné au ramassage de la récolte sur le sol, un rotor de transport (5) doté de dents de transport (8) destinées au transfert de la récolte ramassée par un canal de transport (10) dans un espace fonctionnel de la machine de récolte (1), ainsi qu'un mécanisme de coupe (12) doté de couteaux (11) faisant saillie dans le canal de transport (10), des vis sans fin transversales (13) étant prévues latéralement au niveau des parties d'extrémité frontales du rotor de transport (5), dans laquelle
le rotor de transport (5) est un rotor de transport par le dessus et le canal de transport (10) conduit par-dessus un côté supérieur du rotor de transport (5), les vis sans fin transversales (13) étant montées rotatives par rapport au rotor de transport (5) et pouvant être entraînées en rotation par un entraînement de vis sans fin (17) destiné à l'entraînement des vis sans fin transversales (13) dans le sens opposé au sens de rotation (9) du rotor de transport (5), avec un côté avant orienté vers le dispositif de ramassage (2) vers le bas,
**caractérisé en ce que**
les dents de transport (8) du rotor de transport (5) passent à côté des couteaux (11) faisant saillie dans le canal de transport (10).

2. Machine de récolte selon la revendication précédente, dans laquelle l'entraînement de vis sans fin (17) présente une vitesse de rotation réglable de manière variable, pouvant être modifiée par rapport à la vitesse de rotation du rotor de transport (5).

3. Machine de récolte selon l'une des revendications précédentes, dans laquelle l'entraînement de vis sans fin (17) possède un sens d'entraînement réversible.

4. Machine de récolte selon l'une des revendications précédentes, dans laquelle un dispositif de commande de vitesse de rotation destiné au réglage variable de la vitesse de rotation des vis sans fin transversales par rapport à la vitesse de rotation du rotor de transport est associé à l'entraînement de vis sans fin (17).

5. Machine de récolte selon la revendication précédente, dans laquelle les vis sans fin transversales (13) peuvent être entraînées au choix avec une vitesse de rotation inférieure, égale ou supérieure à celle du rotor de transport (5).

6. Machine de récolte selon l'une des revendications précédentes, dans laquelle l'entraînement de vis sans fin (17) est relié au rotor de transport (5) ou à un entraînement de rotor de transport (7) au moyen d'un train d'engrenages, ledit train d'engrenages étant de préférence réalisé à changement de vitesse et/ou à rapport de transmission réglable.

7. Machine de récolte selon l'une des revendications 1 à 5, dans laquelle l'entraînement de vis sans fin (17) présente un moteur d'entraînement, par exemple sous la forme d'un moteur électrique ou d'un moteur hydraulique, pouvant être commandé indépendamment d'un entraînement de rotor de transport (7).

8. Machine de récolte selon l'une des revendications précédentes, dans laquelle les vis sans fin transversales (13) sont montées sur le rotor de transport (5) de manière rotative par le biais de coussinets de pivotement.

9. Machine de récolte selon l'une des revendications 1 à 7, dans laquelle les vis sans fin transversales (13) et le rotor de transport (5) sont montés rotatifs sur un axe commun par le biais de coussinets de pivotement.

10. Machine de récolte selon l'une des revendications précédentes, dans laquelle le rotor de transport (5) d'une part et les vis sans fin transversales (13) d'autre part sont montés rotatifs indépendamment l'un de l'autre sur un cadre de machine ou une pièce de cadre de montage reliée à celui-ci par le biais de coussinets de pivotement séparés.

11. Machine de récolte selon l'une des revendications précédentes, dans laquelle seulement deux organes de transport, à savoir ledit dispositif de ramassage (2) d'une part et le rotor de transport (5) avec les vis sans fin transversales (13) latérales destinées au transport de la récolte du sol à l'espace fonctionnel de la machine de récolte (1) d'autre part sont prévus et transmettent la récolte directement l'un à l'autre, le dispositif de ramassage (2) étant le premier organe de transport pour la récolte et le rotor de transport (5) avec les vis sans fin transversales (13) latérales étant le dernier organe de transport pour la récolte sur le trajet de cette dernière du sol à l'espace fonctionnel.

12. Machine de récolte selon l'une des revendications précédentes, dans laquelle des cylindres externes épousant la forme des vis sans fin transversales (13) possèdent au moins approximativement le même diamètre qu'un cylindre externe épousant la forme du rotor de transport (5) et/ou les cylindres externes épousant la forme des vis sans fin transversales (13) sont agencés de niveau et/ou sans jeu dans le prolongement du cylindre externe épousant la forme du rotor de transport (5).
